# EUROPEAN PATENT APPLICATION

(11) **EP 3 524 840 A1**
(43) Date of publication of application: **14.08.2019**
(21) Application number: 17860073.0
(22) Date of filing: 04.10.2017
(51) Int. Cl.: F16D 15/00, F16H 3/38

(54) **RIGID AND/OR FLEXIBLE MECHANISMS FOR TRANSMITTING RECTILINEAR AND/OR ROTARY MOVEMENT IN A SINGLE DIRECTION**

(30) Priority: 10.10.2016 EG 2016101664
(71) Applicant: Elgamil, Mohamed Ahmed, Giza (EG)
(72) Inventor: Elgamil, Mohamed Ahmed, Giza (EG)
(74) Representative: Sach, Greg Robert
(86) International application number: PCT/EG2017/000028
(87) International publication number: WO 2018/068805

(57) **Abstract**

The enclosed invention is a new one way clutch where linear or rotary motion between two bodies is transmitted in only one direction by one or more links moving in one of the bodies and connected with the other by friction or positive engagement, the link(s) plays the role of a follower to the cam surface on the other body. The link(s) could be rigid or flexible or in combination of both, and its contact is insured by springs which could be separate or part of any of the mechanism bodies. The link(s) causes the two bodies to cease and move together in the driving direction, and to release in the opposite free movement direction. One of the two bodies can be omitted and replaced by a part of the using machine. Links and cam lubes could be used in pairs. If links reset is needed, flexible elements or additional cam-follower mechanism can be used to avoid impact. Higher forces and torques can be transmitted with minimum backlash, surface fatigue and maximum indexing rate and service life.

## Description

### Technical Field

### Controlling transmitted motion direction between two bodies

### Background Art

Rotary and linear motions are transmitted in one of their two directions between two bodies through several mechanisms specially designed for that purpose, these components are called "one-way clutch". These components transmit the motion from a driving body to drive another body in its same direction (couple the two motions), and when the driver reverses its direction of motion, it moves freely without transmitting its motion to the other body (decouple the two motions). The motion of a body looks opposite in direction if observed from another body due to their relative motion, therefore, the driven body in the previous case transmits its motion to the other body only if it moves in opposite direction to the motion transmitted in that case and moves freely if it reverses its direction.

Many mechanisms are used for that purpose, ratchet mechanisms are the most common of them where they are used heavily in bicycles. Another mechanism consists of rollers backed with springs, these rollers moves to a wide space if the motion is in its free direction and ceased between the two bodies to let them move together if the motion is in the driving direction. Other mechanism uses sprags or cams instead of the rollers.

### Disclosure of Invention

### - Technical Problem

Ratchets can transmit large forces and torques, but they don't do that in a continuous way. Their engagement is related to their lengths and the opposite cavity pitch lengths; therefore, they suffer some backlash till re-engaged together. The other means also suffer some backlash till ceasing, and when ceasing, the motion is transmitted by friction which limits the maximum transmitted force or torque. The size of most of these mechanisms is large compared with the transmitted force or torque.

### - Solution to Problem

Mechanisms described in this enclosed invention incorporate one or more links to transmit the motion between the two bodies in one direction, these links could be flexible or rigid. The transmission could be through friction (which may be enhanced), but friction role in some other designs is only to start and keep positive engagement, the transmission is then carried out through the positive engagement. In the case of positive engagement, a surface shaped like a cam pushes the link(s) that transmits the motion in a positive way, thus the ability to transmit forces and torques increases.

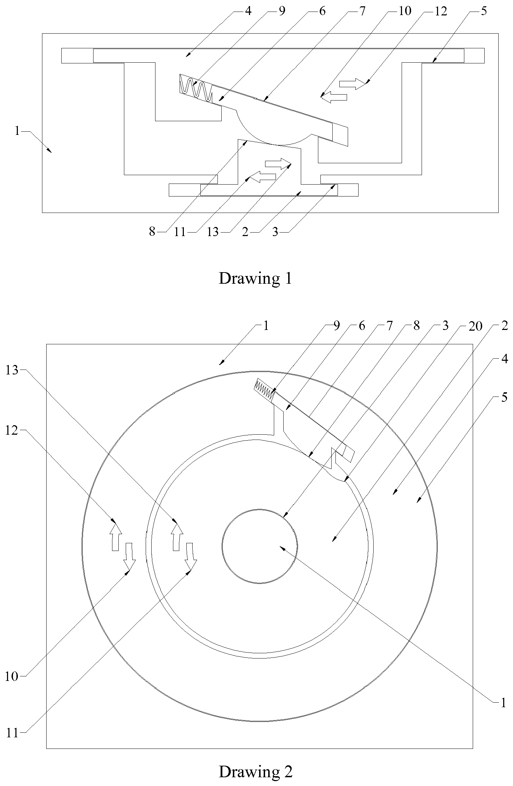

Drawing 1 shows first mechanism to transmit a linear motion in one direction, it consists of a housing 1, in which all bodies are installed (the machine frame), this part is considered fixed and all movements are referred to this frame. Body 2 moves linearly where its movement restricted by the guide 3 which is a groove in the housing 1. Similarly, body 4 moves in parallel to body 2, where its guide is the groove 5 in the housing 1. Link 6 moves inside the inclined guide 7 which is formed in body 4, and touches the surface 8 of body 2.

If the body 4 moves in direction 10, then the friction between the link 6 and the surface 8 will resist link 6 movement inside body 4, and the inclination of the guide 7 will push link 6 towards penetrating the surface 8 and hence increasing the coupling force with body 2. This mechanism pushes the body 2 to be driven in direction 11, which is the same like direction 10. If the bode 4 reverses its movement and moves in direction 12, then the contact will be released due to link 6 movement inside the inclined guide 7. Therefore, body 4 will move freely in direction 12 without driving the body to move in direction 13. Reversing the movement of the opposite body 2 gives the same result, i.e. if the body 2 moves in direction 13, it will drive the body 4 to move in direction 12, but if the body 2 moves in direction 11, it will move freely without driving the body 4.

Spring 6 acts to keep the contact between link 6 and the surface 8, this spring could be formed as a part of link 6 or any other body, or it could be a separate component.

Forming the surface 8 to be like a cam in this drawing, where the 6 is its follower, results in ceasing link 6 movement during driving directions due to positive engagement and not only due to friction. In this case, what pushes link 6 to penetrate body 2 in driving directions is the positive engagement between the cam and its follower and not the limited friction force. This positive engagement provides more capability to transmit more forces and torques.

Drawing (2) shows the case of rotary motion transmission, which is more common, instead of the linear one. All bodies, movements and guides have the same numbers and functions as in drawing (1), but a separate spring (9) differences is used. Another difference is the cam surface 8, this surface has the end 20 which is formed to reset the link 6 to home position in a preparation for a new cycle after one complete revolution if the cam has only one lube, or resetting according to the cam number of lubes. Link 6 surface is convex to show the concept, however it could be concave in practical designs to minimize the Hertizian contact stresses, as will be shown later. Driving directions here are direction 10 in case of body 2 drives body 4, and 13 in case of body 2 drives body 4.

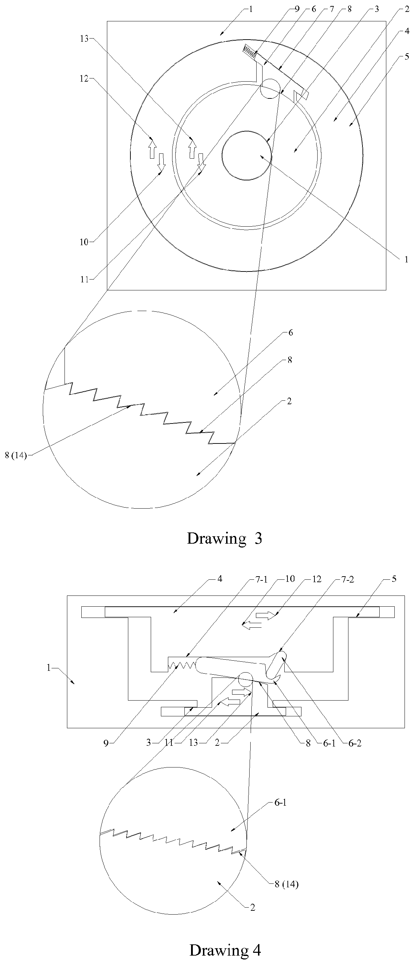

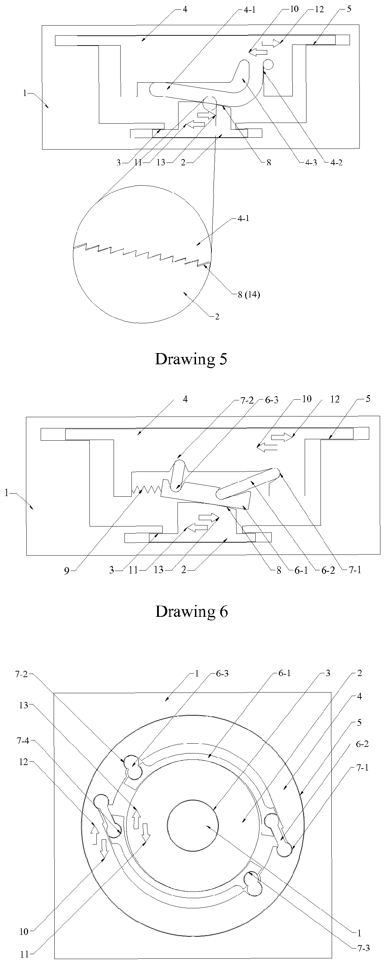

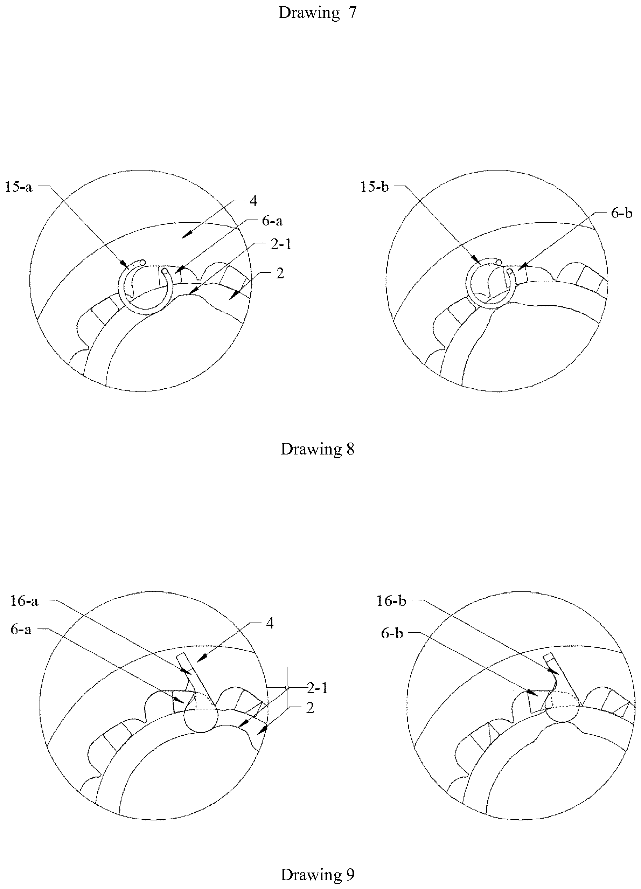

In Drawing 3, contact surfaces between link 6 and body 2 are replaced by circular surfaces with closed radii. This design enables the mechanism to be built in a separate package without body 2, so it can be installed on any shaft to reduce cost and required installing space. The motion in this case is transmitted by friction. To enhance the friction forces in driving directions but not in releasing directions, surface roughing grooves 14 can be formed as shown in the magnified zone.

In Drawing (4), two links 6-1 and 6-2 are used to transmit the motion instead of one link in Drawing (1). In this new case, the two links transmit the motion by positive engagement, and release it by relative motion in the opposite free movement. Guide 7-1 of link 6-1 on body 4 could be linear as shown or curved, while guide 7-2 of link 6-2 on body 4 is rotary. Friction prevents the release during driving direction. The surface texture as shown in the magnified zone can enhance the friction in driving direction and facilitate the release in the free direction.

Flexible part 4-1 in Drawing (5) replaces the two links 6-1 and 6-2 in Drawing (4), where this part becomes a part of body 4. The surface texture as shown in the magnified zone can enhance the friction in driving direction and facilitate the release in the free direction.

In Drawing (6), the three links 6-1, 6-2 1nd 6-3 are used instead of the two links 6-1 an 6-2 in Drawing (4). Inclination of links 6-2 and 6-3 enables increasing the penetrating pressure and coupling force during driving, where link 6-2 of less inclination transmits more force, while link 6-3 of more inclination provides more penetrating pressure.

Drawing (7) shows the motion transmission by using two mechanisms, each of them has three links and the middle link 6-1 is flexible. Link 6-2 clamps the round body 2 during driving, and works as a spring to do its function.

It is preferred to use pairs as in Drawing (7) in order to balance the forces, and if the cam has several lubes (surfaces 8), then the number of lubes may differfrom the number of mechanism pairs to ensure transmitting the forces/torques, even if some of them reduced to zero during resetting for example. To reset link 6 position in preparation for a new cycle, and avoid the impact of collision between it and the cam surface end 20 as described in Drawing (2), the resetting force should be applied gradually. In Drawing (8), two zoom in views are shown, when a flexible elements (a spring) is used to gradually apply the resetting force. The spring 15 is hinged with link 6 and body 4. A resetting cam 2-1 is formed in body 2 or attached to it. When link 6 is about to be reset, marked as 6-a, the cam 2-1 starts to engage with the resetting spring at its resetting start 15-a. At the end of resetting action, the spring is compressed to 15-b, the link is at its new cycle start and marked as 6-b, and body 2 cam surface can go beneath link 6 at this new position as shown in the drawing. Spring 15 may be sufficient to push link 6 to keep in contact with body 2, if not sufficient, additional springs -not shown in this drawing-can assist, especially at high speeds.

Another method to avoid impact is shown in Drawing (9). In this drawing, a follower 16 is used to reset link 6 position. The cam surface 2-1 can be formed to make follower velocity and acceleration at its motion start (6-a & 16-a) and stop (6-b & 16-b) to be zero, by using cycloidal function for example. The cam should then allow the follower 16 to reset by a spring, not shown, so that the follower will not restrict link 6 movement. Link 6 pushing spring is not shown in this drawing.

### Brief Description of Drawings

Drawing (1) shows an example of using only one link to transmit the linear motion in only one direction between two bodies, and how to form the spring as an integrated part of the link.
Drawing (2) shows an example of using only one link to transmit the rotary motion in only one direction between two bodies.
Drawing (3) shows an example of using only one link to transmit the rotary motion in only one direction between two bodies where friction or enhanced friction is the motion coupling force. It also shows the case when a part of the machine in which this clutch is installed replaces one body of the clutch.
Drawing (4) shows an example of using two links mechanism to transmit the linear motion in only one direction between two bodies.
Drawing (5) shows an example of how to replace the two links in Drawing (4) by a flexible part to transmit the linear motion in only one direction between two bodies.
Drawing (6) shows an example of using three links mechanism to transmit the linear motion in only one direction between two bodies.
Drawing (7) shows an example of using pair of three links mechanism, one of the links is flexible, to transmit the rotary motion in only one direction between two bodies.
Drawing (8) shows an example of resetting the link that transmit the motion to a home position to start a new cycle of its function. In this example a flexible element (a spring) is used to gradually apply the resetting force to avoid cam and link collision impact. Close radii of link 6 and body 2 cam surface (link 6 contact surface is concave) increases the contact surface, reduces the Hertizian stresses and increases the surface life.
Drawing (9) shows another example of resetting the link that transmit the motion to a home position to start a new cycle of its function. In this example a follower is used to smoothen link start and stop resetting motion.

### Industrial Applicability

One-way clutches are widely used in motion transmission and control, it can be found for example in equipments, bicycles, motor cycles and lot of machines. In this enclosed invention, the transmitted forces and torques increased with respect to the prevailing ones, especially when using its positive engagement designs. Besides, dependency on friction to cease motion transmitting element during motion transmission is reduced, the contact area can be increased, thus the surface fatigue is also reduced and hence the service life is increased. If it is used to generate continuous motion from oscillating or reciprocating ones in indexing, the indexing rate could be increase, the backlash and minimum feeding angle could be minimized.

## Claims

1. A mechanism to transmit the linear or rotary motion from a body to another body in only one direction, while it moves freely on the opposite direction without transmitting the motion, wherein the mechanism consists of at-least one link which could be rigid or flexible and the motion is transmitted by means of friction, enhanced friction or positive engagement, each mean can be used separately or in combination with others, and the contact is ensured by friction and/or springs.

2. A mechanism to transmit linear or rotary motion between two bodies in only one direction as in claim 1, wherein a link is guided in one of the two bodies and contacts the other body in such a way that the two bodies are ceased to move together in the driving directions and released in the opposite free movement directions.

3. A mechanism to transmit linear or rotary motion between two bodies in only one direction as in claim 1, wherein the link guide in claim 2 insures that the two bodies are ceased to move together in the driving directions and released in the opposite free movement directions.

4. A mechanism to transmit linear or rotary motion between two bodies in only one direction as in claim 1, where the contact of the link with the other body as in claim 2 interacts by friction, enhanced friction or positive engagement such that the two bodies are ceased to move together in the driving directions, and released in the opposite free movement directions.

5. A mechanism to transmit linear or rotary motion between two bodies in only one direction as in claim 1, wherein more links can replace the one link.

6. A mechanism to transmit linear or rotary motion between two bodies in only one direction as claimed in claim 1, where the links in claim 5 could be rigid or flexible or in combination of both.

7. A mechanism to transmit linear or rotary motion between two bodies in only one direction as claimed in any one of the claims 1 to 6, wherein the springs can be used to insure the contact and engagement.

8. A mechanism to transmit linear or rotary motion between two bodies in only one direction as claimed in any one of the claims 1 to 7, wherein the springs could be separate or integrated with any of the mechanism bodies.

9. A mechanism to transmit linear or rotary motion between two bodies in only one direction as claimed in any one of the claims 1 to 8, wherein it is possible that a part of the machine that uses this mechanism can replace one of the mechanism bodies.

10. A mechanism to transmit linear or rotary motion between two bodies in only one direction as claimed in any one of the claims 1 to 9, wherein one or more links or pairs of links can be used to transmit the motion.

11. A mechanism to transmit linear or rotary motion between two bodies in only one direction as claimed in any one of the claims 1 to 10, wherein the number of the links pairs and cam lubes are different and the contacts are different in phase.

12. A mechanism to transmit linear or rotary motion between two bodies in only one direction as claimed in any one of the claims 1 to 11, where resetting the links, if needed, could be carried out by flexible members and additional cam.

13. A mechanism to transmit linear or rotary motion between two bodies in only one direction as claimed in any one of the claims 1 to 11, where resetting the links, if needed could be carried out, by additional cam and follower.
